# EUROPÄISCHE PATENTSCHRIFT

(11) **EP 4 166 721 B1**
(45) Veröffentlichungstag und Bekanntmachung des Hinweises auf die Patenterteilung: **01.04.2026**
(21) Anmeldenummer: 22186655.1
(22) Anmeldetag: 25.07.2022
(51) Int. Cl.: E01H 4/02

(54) **COMPUTERGESTÜTZTES VERFAHREN ZUR PFLEGE EINER SCHNEEPISTE SOWIE COMPUTERGESTÜTZTES SYSTEM ZUR DURCHFÜHRUNG EINES DERARTIGEN VERFAHRENS**
COMPUTER-ASSISTED METHOD FOR THE MAINTENANCE OF A SNOW SLOPE AND COMPUTER-ASSISTED SYSTEM FOR CARRYING OUT SUCH A METHOD
PROCÉDÉ INFORMATISÉ D'ENTRETIEN D'UNE PISTE DE NEIGE ET SYSTÈME INFORMATISÉ PERMETTANT DE METTRE EN OEUVRE UN TEL PROCÉDÉ

(30) Priorität: 15.10.2021 DE 102021211674
(43) Veröffentlichungstag der Anmeldung: 19.04.2023
(73) Patentinhaber: Kässbohrer Geländefahrzeug AG, 88471 Laupheim (DE)
(72) Erfinder: Behmüller, Andreas, 89171 Illerkirchberg (DE); Henger, Claudius, 88480 Achstetten (DE)
(74) Vertreter: Patentanwälte Ruff, Wilhelm, Beier, Dauster & Partner mbB

(56) Entgegenhaltungen:
- EP-A1- 1 182 409
- EP-A1- 3 633 107
- WO-A1-2020/119514

## Beschreibung

Die Erfindung betrifft ein computergestütztes Verfahren zur Pflege einer Schneepiste, gemäß welchem zeitabhängig Zustandsdaten der Schneepiste erfasst werden. Die Erfindung betrifft zudem ein computergestütztes System zur Durchführung eines solchen Verfahrens mit einer Zustandssensorik zum Aufnehmen von Zustandsdaten einer Schneepiste sowie mit einer Zeiterfassungseinheit, die mit der Zustandssensorik gekoppelt ist, um Zustandsdaten der Schneepiste zeitabhängig zu erfassen.

Es ist aus der Praxis bekannt, einen Pistenzustand einer Schneepiste in einem Skigebiet durch erfahrenes Personal subjektiv bewerten zu lassen. Anhand der subjektiven Bewertung werden Pistenraupen, die entsprechende Schneepisten präparieren, durch ebenfalls erfahrenes Personal gesteuert. Falls der Schneepiste eine künstliche Beschneiung zugeordnet ist, ist weiteres erfahrenes Personal vorgesehen, das die Beschneiungsanlagen betreibt. Schließlich ist ein Skigebiet mit Liftanlagen versehen, die Wintersportler innerhalb des Skigebiets zu verschiedenen Schneepisten transportieren. EP 1 182 409 A1 beschreibt ein Verfahren nach dem Oberbegriff des Anspruchs 1.

Aufgabe der Erfindung ist es, ein Verfahren und ein System der eingangs genannten Art zu schaffen, die dauerhaft eine gute Qualität von Schneepisten ermöglichen.

Diese Aufgabe wird durch das computergestützte Verfahren des Anspruchs 1 gelöst.

Durch das erfindungsgemäße Verfahren entfällt eine subjektive Vor-Ort-Bewertung. Anhand des Vorhersagemodells ist eine vorausschauende Planung von Präparierung und Beschneiung der Schneepiste möglich. Das Vorhersagemodell ermöglicht für einen oder mehrere Zeitpunkte in der Zukunft Vorhersagen für zumindest weitgehend exakte Veränderungen des Zustands der Schneepiste, so dass für diesen wenigstens einen in der Zukunft liegenden Zeitpunkt vorausschauend Maßnahmen zur Pflege der Schneepiste getroffen werden können, die negative Veränderungen der Schneepiste vermeiden. Dadurch wird ein homogener Aufbau der Schneepiste und eine gute Qualität der Schneepiste über einen langen Zeitraum gewährleistet. Der Zeitraum kann nur wenige Tage, eine oder wenige Wochen oder eine ganze Wintersaison darstellen. Unter Schneebeschaffenheitsdaten können Schneetemperaturen in unterschiedlichen Tiefen der Pistenoberfläche, Schneehärten in unterschiedlichen Tiefen der Pistenoberfläche wie auch Wasseranteile der Pistenoberfläche in unterschiedlichen Tiefen zu verstehen sein. Die zeitabhängige Erfassung der genannten Daten meint die Erfassung zu unterschiedlichen Zeitpunkten, wodurch Veränderungen der Daten abhängig von der vergangenen Zeit erfasst werden. Das Vorhersagemodell basiert auf objektiven Daten und vermeidet subjektive Einflüsse durch eine menschliche Beurteilung. Unter Zuhilfenahme von Erfahrungswerten kann eine zukünftige Veränderung der Beschaffenheit der Schneepiste ausgehend von den momentanen Schneebeschaffenheitsdaten in dem Vorhersagemodell ausgedrückt werden. Dabei können zeitabhängige Alterungsvorgänge der Schneebeschaffenheit einbezogen werden. Beispielsweise kann sich die Schneebeschaffenheit infolge von Alterung über die Zeit ändern infolge von teilweiser Sublimation der Schneekristalle oder Verdichtung der Schneedecke durch ihr Eigengewicht.

Die besagten Informationen über das Vorhersagemodell können einzelne Funktionsbereiche betreffen, die zur Pflege der Schneepiste nötig sind, oder auch gruppenweise Zuordnungen mehrerer Funktionsbereiche, die zusammenwirken.

In Ausgestaltung der Erfindung umfassen die Zustandsdaten, insbesondere zusätzlich zu den Schneebeschaffenheitsdaten, Beschneiungsdaten der Schneepiste und Topografiedaten der Schneepiste, wobei die Beschneiungsdaten, die Topografiedaten und die Schneebeschaffenheitsdaten jeweils zeitabhängig erfasst werden. Unter Beschneiungsdaten können sowohl Beschneiungsdaten einer künstlichen Beschneiung als auch Beschneiungsdaten einer natürlichen Beschneiung durch Schneefall zu verstehen sein. Topografiedaten der Schneepiste können Schneehöhen und Schneevolumina sowie Veränderungen dieser Schneehöhen und Schneevolumina sein, insbesondere durch Belastungen der Schneepiste, die wetterbedingt oder menschenbedingt sein können. Topografiedaten können auch die Oberflächenmodelle des Berghangs ohne die darüberliegende Schneedecke sein. Veränderungen von Schneevolumina und Schneehöhen in unterschiedlichen Bereichen der Schneepiste können insbesondere durch Schneeverfrachtung entstehen. Durch Einbezug der Beschneiungsdaten und der Topografiedaten lässt sich das Vorhersagemodell VM präzisieren.

In weiterer Ausgestaltung der Erfindung werden die Schneebeschaffenheitsdaten mittels wenigstens einer Pistenraupe in einem Fahrbetrieb der wenigstens einen Pistenraupe aufgenommen, insbesondere während die Schneepiste mittels der Pistenraupe präpariert wird. Damit lässt sich die Beschaffenheit der Pistenoberfläche an mehreren Orten, wünschenswerterweise sogar flächendeckend, durch Überfahren der Pistenoberfläche mittels der Pistenraupe aufnehmen. Da ein derartiges Überfahren der Schneepiste beim Präparieren der Schneepiste gewöhnlicherweise ohnehin erfolgt, können die Schneebeschaffenheitsdaten somit ohne zusätzlichen Aufwand aufgenommen werden.

Laut der Erfindung werden mittels wenigstens einer an der Pistenraupe angeordneten Sensorik für die Schneebeschaffenheitsdaten eine Schneehärte oder/und eine Schneetemperatur oder/und ein Wasseranteil der Pistenoberfläche aufgenommen. Unter einer Sensorik ist vorliegend eine Vorrichtung zu verstehen, die einen oder mehrere Sensoren oder Messaufnehmer umfasst, die Sensordaten in Abhängigkeit einer aufgenommenen Messgröße erzeugen. Schneehärte, Schneetemperatur oder/und Wasseranteil erweisen sich als besonders geeignet, um die Beschaffenheit der Schneedecke, d. h. der Pistenoberfläche, auf objektive Weise zu beschreiben.

Zweckmäßig kann die Sensorik zum Aufnehmen der Schneebeschaffenheitsdaten an einer Eindringvorrichtung der Pistenraupe, insbesondere einem Schwert der Pistenraupe angeordnet sein, welches beim Befahren der Pistenoberfläche, vorzugsweise in gleichbleibender Tiefe, in die Schneedecke eintaucht und durch die Pistenoberfläche gezogen wird. Alternativ oder zusätzlich kann mittels der Sensorik zum Aufnehmen der Schneebeschaffenheitsdaten eine Körperschallfrequenz gemessen sein, die beim Präparieren der Pistenoberfläche auf die Pistenraupe übertragen wird und die von der Beschaffenheit der Pistenoberfläche abhängt. Derartige Sensoriken erlauben eine besonders präzise Aufnahme der Schneebeschaffenheitsdaten. Die Aufnahme der Schneebeschaffenheitsdaten mittels Körperschallfrequenzmessung besticht zudem darin, dass die Messung selbst berührungsfrei erfolgen kann und somit kein Eingriff in die Schneedecke erforderlich ist.

In weiterer Ausgestaltung der Erfindung werden zeitabhängig Daten über eine Frequentierung der Schneepiste durch Wintersport betreibende Personen erfasst und zur Errechnung des Vorhersagemodells verwendet. Diese Daten ermöglichen Rückschlüsse auf die menschenbedingte Belastung der Schneepiste und verbessern die Genauigkeit des Vorhersagemodells weiter. Die Daten über die Frequentierung der Schneepiste durch Wintersport betreibende Personen können direkt oder indirekt erfasst werden. Unter der direkten Erfassung sind insbesondere Lichtschranken eingangs der Schneepiste zu verstehen. Unter indirekten Daten sind Auslastungen wenigstens einer Liftanlage zu verstehen, die die Personen den Berg hinauftransportieren, damit die Personen die Schneepiste von oben her befahren können.

In weiterer Ausgestaltung der Erfindung werden ausgehend von dem Vorhersagemodell Steuerungsanweisungen zum Betreiben der wenigstens einen Pistenraupe auf der Schneepiste oder/und zum Betreiben einer Beschneiungsanlage für die Schneepiste oder/und zum Zugang von Wintersport betreibenden Personen zu der Schneepiste erzeugt. Entsprechende Steuerungsanweisungen können eine Routenplanung für die Pistenraupe entlang der Schneepiste wie auch eine Schneeverfrachtungsplanung durch die Pistenraupe umfassen. Auch die Gestaltung der Pistenoberfläche durch eine Heckfräse, der zeitliche Aufwand zur Schneepistenpräparierung und die Anzahl von einzusetzenden Pistenraupen wie auch einzusetzendem Personal können vorausschauend angegeben werden.

Die Steuerungsanweisungen können entweder lediglich Informationen darstellen, die Personal oder Wintersport betreibenden Personen im Bereich der Schneepiste signalisiert werden. Alternativ oder ergänzend können Steuerungsanweisungen auch die Ansteuerung von Beschneiungsanlagen, von Liftanlagen, von Signalgebern zum Sperren oder Freigeben der Schneepiste oder zum Steuern des Fahrantriebs der Pistenraupe oder zum Steuern von Heckfräse oder Räumschild der Pistenraupe darstellen.

Wenn gemäß einer weiteren Ausgestaltung der Erfindung die Steuerungsanweisungen ausgegeben werden, dann dienen diese Steuerungsanweisungen zur Information von Personal oder von Wintersport betreibenden Personen.

Wenn gemäß einer weiteren Ausgestaltung der Erfindung die Steuerungsanweisungen an die Pistenraupe oder/und an die Beschneiungsanlage oder/und an stationäre Vorrichtungen zur Steuerung des Zugangs von Wintersport betreibenden Personen zu der Schneepiste geleitet werden, dann ist hierunter eine Steuerung der entsprechenden Funktionsvorrichtungen wie Pistenraupe, Beschneiungsanlage, Liftanlage oder Signalgebern zu verstehen, die einen Zugang zu der Schneepiste freigeben oder sperren.

In weiterer Ausgestaltung der Erfindung wird in Abhängigkeit zu den Steuerungsanweisungen die Beschaffenheit der Pistenoberfläche wenigstens bereichsweise, insbesondere bedarfsgerecht, mittels der wenigstens einen Pistenraupe oder/und der Beschneiungsanlage angepasst. Da die Steuerungsanweisungen von dem Vorhersagemodel abhängen, erfolgt die Anpassung der Beschaffenheit der Pistenoberfläche auch in Abhängigkeit zum Vorhersagemodell. Bedarfsgerechte Anpassung bedeutet dabei, dass die Anpassung der Pistenoberfläche nur in Bereichen oder/und nur in einem Umfang vorgenommen werden kann, die für eine optimale Pistenqualität im Gesamten erforderlich ist. Durch das Anpassen der Beschaffenheit der Pistenoberfläche lässt sich eine besonders gute Pistenqualität durch gegenseitige Abstimmung von Schubarbeiten mittels der wenigstens einen Pistenraupe, einem jeweiligen Präparierzeitpunkt sowie einem situativen Einsatz von Beschneiung erreichen.

In weiterer Ausgestaltung der Erfindung werden beim Erfassen der Schneebeschaffenheitsdaten zeitabhängige Datensätze der Schneebeschaffenheitsdaten erzeugt, die je Erfassung einander zugeordnete Zeitdaten, geografische Ortsdaten und Qualitätsdaten der Pistenoberfläche umfassen, wobei den Qualitätsdaten vorzugsweise je Erfassung Tiefenordinaten zugeordnet werden. Mit anderen Worten: In je einem Datensatz können die Qualitätsdaten mit einem digitalen Orts- und einem Zeitstempel versehen werden. Vorteilhaft ergibt sich ein besonders genaues Vorhersagemodell. Insbesondere kann aus den Datensätzen ein Kennfeld erzeugt werden, mittels welchem sich die Schneebeschaffenheit visualisieren lässt. So lässt sich auf besonders anschauliche Weise anzeigen, zu welchem Zeitpunkt, wo, und insbesondere in welcher Schneetiefe, welche Beschaffenheit der Schneepiste vorzufinden ist und an wenigstens einem in der Zukunft liegenden Zeitpunkt vorzufinden sein wird. Dies kann auch im Hinblick auf eine Gestaltung der Steuerungsanweisungen genutzt werden, beispielsweise um einem Fahrer der Pistenraupe oder einem Bediener der Beschneiungsanlage anzuzeigen, wo genau Präparierungsmaßnahmen wann vorgenommen werden sollen.

In weiterer Ausgestaltung der Erfindung umfassen die Qualitätsdaten eine Schneehärte oder/und eine Schneetemperatur oder/und eine Schneedichte oder/und einen Wasseranteil. Die Schneebeschaffenheitsdaten geben somit an, zu welcher Zeit, an welchem geografischen Ort und in welcher Schneetiefe eine jeweilige Schneehärte, Schneetemperatur, Schneedichte oder/und Wasseranteil vorzufinden sind. Dementsprechend kann das Vorhersagemodell präzisiert werden.

Zweckmäßig lässt sich die Schneedecke anhand der Qualitätsdaten mit Beschaffenheitsattributen, insbesondere bereichsweise, bewerten. Bei derartigen Beschaffenheitsattributen kann es sich um Attribute wie "pulverig", "vereist", "griffig" oder "sulzig", "verharscht" oder Ähnlichem handeln, die trotz objektiven Ermittlung der Qualitätsdaten dem Betrachter ein subjektiv verständliches Bild über die Beschaffenheit der Schneedicke verschaffen.

In weiterer Ausgestaltung der Erfindung umfassen die Zustandsdaten Schneehöhen- und - volumendaten der Schneepiste oder/und Topografiedaten der Schneepiste. Durch den Einbezug weiterer Daten in das Vorhersagemodell lässt sich dieses vorteilhaft noch weiter präzisieren.

In weiterer Ausgestaltung der Erfindung werden zeitabhängig aktuelle oder/und zukünftige meteorologische Daten für eine Umgebung der Schneepiste erfasst und zur Errechnung des Vorhersagemodells verwendet. Dadurch ist eine weitere Verbesserung des Vorhersagemodells ermöglicht. Unter den meteorologischen Daten sind Wetterdaten wie Lufttemperatur und Luftfeuchtigkeit, Windstärke, Windrichtung, Sonneneinstrahlung, Verdunstungsraten, aber auch Abschattungen der Schneepisten durch schattenwerfende Objekte, wie insbesondere Gebäude, Wald oder Bäume, zu verstehen. Die meteorologischen Daten können sowohl von lokalen Wetterstationen als auch von regionalen oder globalen Wettererfassungssystemen gesammelt werden. Hierdurch wird die Genauigkeit des Vorhersagemodells verbessert.

In weiterer Ausgestaltung der Erfindung werden zeitabhängig Fahrparameter oder/und Prozessparameter wenigstens einer die Schneepiste präparierenden Pistenraupe erfasst und zur Errechnung des Vorhersagemodells verwendet. Auch hierdurch wird die Genauigkeit des Vorhersagemodells weiter verbessert. Unter Fahrparametern sind Fahrgeschwindigkeit, Fahrrouten, Fahrtrichtungsänderungen und laufende Positionsänderungen der Pistenraupe im Fahrbetrieb auf der Schneepiste zu verstehen. Unter den Fahrparametern der Pistenraupe ist auch eine Neigung der Pistenraupe bei der Schneepistenpräparierung zu verstehen, wodurch Rückschlüsse auf die Neigung der Schneepiste gezogen werden können. Positionsänderungen der Pistenraupe wie auch Fahrgeschwindigkeit können über globale Positioniersysteme oder über lokale Positioniersysteme erfasst werden. Unter Prozessparametern der Pistenraupe sind Arbeitsdaten einer Heckfräse und eines frontseitigen Räumschilds der Pistenraupe zu verstehen, insbesondere Drehgeschwindigkeit der Fräswellen, Eintauchtiefe der Heckfräse in die Pistenoberfläche, Anpressdruck der Heckfräse einschließlich eines Finishers auf der Pistenoberfläche, und für das frontseitige Räumschild Stellpositionen des Räumschilds, Schubbelastungen des Räumschilds und Schneevolumina, die durch das Räumschild bewegt werden.

In weiterer Ausgestaltung der Erfindung werden die erfassten Zustandsdaten mittels einer Anzeigeeinrichtung angezeigt. Vorteilhaft lässt sich somit eine Ist-Beschaffenheit der Schneepiste für Wintersport treibende Personen oder/und für einen Fahrer der wenigstens einen Pistenraupe oder/und für Bedienungspersonal von Beschneiungsanlagen oder/und Liftanlagen anzeigen. Die Anzeigeeinrichtung kann eine virtuelle Karte umfassen.

In weiterer Ausgestaltung der Erfindung wird die wenigstens eine Pistenraupe in Abhängigkeit von den erfassten zeitabhängigen Schneebeschaffenheitsdaten gesteuert. Vorzugsweise wird die Pistenraupe in Abhängigkeit von dem auf Basis der Schneebeschaffenheitsdaten errechneten Vorhersagemodell gesteuert. Damit lässt sich die Schneepiste besonders gut auf einen Optimalzustand hin präparieren.

In weiterer Ausgestaltung der Erfindung werden Informationen zur Steuerung des Fahrwegs oder/und von Funktionsparametern der Heckfräse oder/und des Räumschilds, insbesondere der Eintauchtiefe der Heckfräse oder/und der Fräswellengeschwindigkeit, an den Fahrer der Pistenraupe oder/und an ein autonomes Steuersystem für die Pistenraupe ausgegeben. Dies führt vorteilhaft zu einer weiteren Verbesserung der Präparierung der Schneepiste.

Für das computergestützte System der eingangs genannten Art wird die der Erfindung zugrundeliegende Aufgabe durch die Merkmale des Anspruchs 9 gelöst. Das computergestütztes System dient zur Durchführung eines erfindungsgemäßen Verfahrens wie voranstehend beschrieben. Es umfasst eine Zustandssensorik zum Aufnehmen von Zustandsdaten einer Schneepiste und eine Zeiterfassungseinheit, die mit der Zustandssensorik gekoppelt ist, um die Zustandsdaten zeitabhängig zu erfassen. Dabei umfasst die Zustandssensorik wenigstens eine Sensorik zum Aufnehmen von Schneebeschaffenheitsdaten der Pistenoberfläche der Schneepiste, wobei ein elektronisches Datenverarbeitungssystem vorgesehen ist, das mit der Zustandssensorik und der Zeiterfassungseinheit gekoppelt ist, um die Zustandsdaten zu erfassen und hieraus das Vorhersagemodell für den Zustand der Schneepiste zu wenigstens einem in der Zukunft liegenden Zeitpunkt zu errechnen, wobei an das Datenverarbeitungssystem eine Ausgabeeinheit angeschlossen ist, die Informationen über das errechnete Vorhersagemodell ausgibt. Die oben angeführten Vorteile des erfindungsgemäßen Verfahrens übertragen sich auch auf das erfindungsgemäße computergestützte System zur Durchführung eines derartigen Verfahrens.

In Ausgestaltung der Erfindung umfasst die Zustandssensorik eine Sensorik zur Erfassung von Beschneiungsdaten der Schneepiste und eine Sensorik zur Erfassung von Topografiedaten der Schneepiste, wobei die Zeiterfassungseinheit mit der jeweiligen Sensorik gekoppelt ist, um die Beschneiungsdaten, die Topografiedaten und die Schneebeschaffenheitsdaten zeitabhängig zu erfassen, wobei das elektronische Datenverarbeitungssystem mit den Sensoriken und der Zeiterfassungseinheit gekoppelt ist, um die Daten zu erfassen und hieraus das Vorhersagemodell für einen Zustand der Schneepiste zu wenigstens einem in der Zukunft liegenden Zeitpunkt zu errechnen. Hierdurch lässt sich ein besonders präzises Vorhersagemodell aufstellen.

In weiterer Ausgestaltung der Erfindung umfasst das System wenigstens eine Pistenraupe umfasst, wobei wenigstens eine der Sensoriken zum Aufnehmen der Schneebeschaffenheitsdaten an der Pistenraupe angeordnet ist. Vorteilhaft können somit Daten für die Errechnung des Vorhersagemodells während der Pistenpräparierung aufgenommen werden.

In weiterer Ausgestaltung der Erfindung ist wenigstens eine an der Pistenraupe angeordnete Sensorik an einer Eindringvorrichtung der Pistenraupe angeordnet, die dazu eingerichtet ist, beim Befahren der Pistenoberfläche in im Wesentlichen gleichbleibender Tiefe in die Pistenoberfläche einzutauchen und durch die Schneedecke gezogen zu werden. Eine derartige Sensorik erlaubt eine besonders genaue Aufnahme der Schneebeschaffenheitsdaten.

In weiterer Ausgestaltung der Erfindung ist wenigstens eine an der Pistenraupe angeordnete Sensorik zum Aufnehmen von Körperschallfrequenzen eingerichtet ist, die beim Präparieren der Schneepiste mittels der Pistenraupe in Abhängigkeit zu der Beschaffenheit der Pistenoberfläche auf die Pistenraupe übertragen werden, um Schneebeschaffenheitsdaten aufzunehmen. Die Aufnahme der Schneebeschaffenheitsdaten mittels Körperschallfrequenzmessung besticht darin, dass die Messung selbst berührungsfrei erfolgen kann und somit kein Eingriff in die Schneedecke erforderlich ist.

In weiterer Ausgestaltung der Erfindung ist wenigstens eine Sensorik zum Aufnehmen der Schneebeschaffenheitsdaten an der Pistenoberfläche angeordnet, insbesondere in einer Schneedecke der Pistenoberfläche eingebettet. Mehrere derartige Sensoriken können netzoder clusterartig über die Schneepiste verteilt sein. Vorteilhaft lässt sich mittels einer solchen, vorzugsweise stationären, Sensorik die Schneebeschaffenheit an konstanten Stelle mehrfach während eines längeren Zeitraums, beispielsweise einer ganzen Saison, erfassen. Dies erlaubt es, Veränderungen in der Schneebeschaffenheit ohne Verfälschung wegen lokaler Abweichungen besonders präzise zu ermitteln.

In weiterer Ausgestaltung der Erfindung ist wenigstens eine Sensorik zur kontinuierlichen oder zeitlich getakteten Aufnahme der Zustandsdaten, insbesondere der Schneebeschaffenheitsdaten, eingerichtet. Eine aufgenommene Datenmenge lässt sich somit optimal Abstimmen im Hinblick auf einen wünschenswert geringen Verarbeitungs- und Speicheraufwand und zugleich präzisem Vorhersagemodell.

In weiterer Ausgestaltung der Erfindung weist das elektronische Datenverarbeitungssystem eine Schnittstelle für einen Anschluss an eine Erfassungseinheit meteorologischer Daten auf. Dies ermöglicht die Einspeisung der meteorologischen Daten für die Präzisierung des Vorhersagemodells.

In weiterer Ausgestaltung der Erfindung umfasst das System wenigstens eine Pistenraupe, wobei das elektronische Datenverarbeitungssystem drahtlos mit einer elektronischen Datenerfassungseinheit gekoppelt ist, die der wenigstens einen Pistenraupe zugeordnet ist und Positionsdaten und/oder Fahrdaten der Pistenraupe und/oder Prozessparameter der Heckfräse und des Räumschilds der Pistenraupe erfasst. Subjektive Einflüsse durch den Fahrer der Pistenraupe lassen sich somit reduzieren.

In weiterer Ausgestaltung der Erfindung ist das elektronische Datenverarbeitungssystem drahtlos oder drahtgebunden mit einer stationären Zähleinrichtung zur direkten oder indirekten Erfassung von Wintersport betreibenden Personen, die die Schneepiste frequentieren, gekoppelt. Die ermittelten Daten können vorteilhaft genutzt werden, um das Vorhersagemodell noch genauer aufzustellen.

In weiterer Ausgestaltung der Erfindung umfasst das System wenigstens eine stationäre Beschneiungsanlage, die der Schneepiste zugeordnet ist, wobei das elektronische Datenverarbeitungssystem drahtlos oder drahtgebunden mit einer Steuereinrichtung der Beschneiungsanlage gekoppelt ist, um der Steuereinrichtung Steuerungsanweisungen für eine Beschneiung zu übermitteln. Somit lässt sich aktiv Einfluss nehmen auf die Schneebeschaffenheit. Dabei kann die Beschneiung unter Zuhilfenahme des Vorhersagemodells besonders effizient gestaltet werden.

In weiterer Ausgestaltung der Erfindung ist das elektronische Datenverarbeitungssystem mit einer Steuereinheit der Pistenraupe drahtlos verbunden, um der Steuereinheit Steuerungsanweisungen zur Ansteuerung eines Fahrantriebs und/oder einer Heckfräsensteuerung und/oder einer Räumschildsteuerung zu übermitteln. Dies erlaubt es, auch spontan während eines laufenden Einsatzes der Pistenraupe zum Präparieren der Schneepiste Einfluss zu nehmen, falls sich das Vorhersagemodell ändert.

In weiterer Ausgestaltung der Erfindung ist eine stationäre Vorrichtung zur Steuerung einer Frequentierung der Schneepiste vorgesehen, wobei das elektronische Datenverarbeitungssystem drahtlos oder drahtgebunden mit der Vorrichtung gekoppelt ist, um Steuerungsanweisungen zur Veränderung der Frequentierung der Schneepiste zu übermitteln. Dies erlaubt es, die Frequentierung unter Zuhilfenahme des Vorhersagemodells so zu steuern, dass die Pistenqualität für möglichst lange Zeit einen möglichst guten Zustand beibehält. Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt schematisch eine Schneepiste, der ein computergestütztes System zur Überwachung und Pflege der Schneepiste gemäß einer bevorzugten Ausführungsform der Erfindung zugeordnet ist, und
- Fig. 2: ein Blockschaubild für ein System nach Fig. 1.

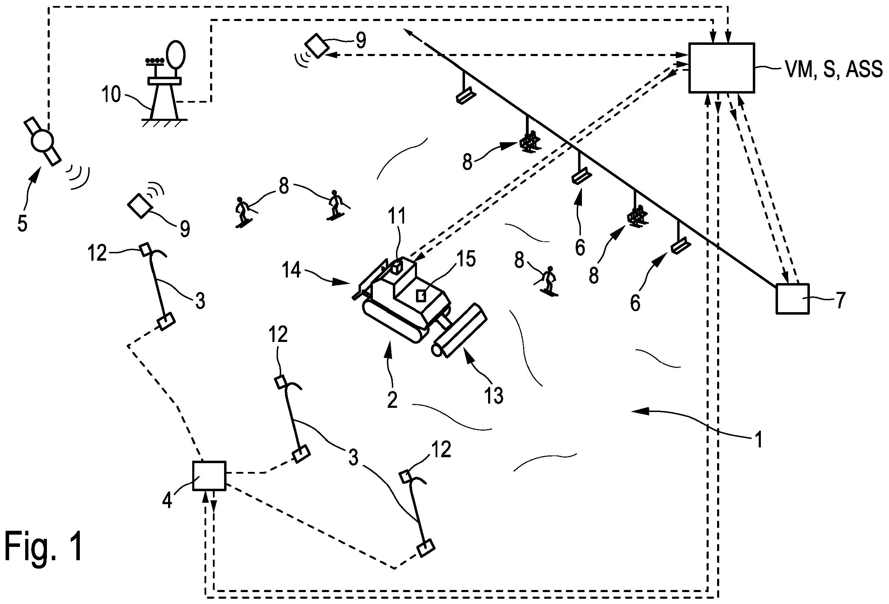

Eine Schneepiste 1 nach Fig. 1 ist in einem Skigebiet vorgesehen und weist ein Gefälle auf, das ein Abfahren der Schneepiste 1 durch Wintersport betreibende Personen 8 ermöglicht, die die Schneepiste hangabwärts befahren. Vorliegend bildet die Schneepiste 1 somit einen präparierten, schneebedeckten Hang. Die Präparierung der Schneepiste 1 erfolgt durch wenigstens eine Pistenraupe 2. Zur künstlichen Beschneiung des Berghangs und damit der Schneepiste 1 ist eine Beschneiungsanlage 3 vorgesehen, die mehrere seitlich neben der Schneepiste positionierte Schneeausbringungsstationen aufweist. Der Schneepiste 1 ist zudem eine Liftanlage 6 zugeordnet, die Personen 8 des Skigebiets nach oben fördert, damit entsprechende Personen 8 den Berghang und damit die Schneepiste 1 befahren können. Schematisch ist zudem eine Wetterstation 10 dargestellt, die meteorologische Daten MD erfassen und weiterleiten kann. Hangseitig an einem Eingangsabschnitt der Schneepiste 1 ist ein Lichtschrankensystem 9 vorgesehen, das Wintersport betreibende Personen 8, die auf die Schneepiste 1 gelangen, zählt. Der Beschneiungsanlage 3 ist eine Steuereinrichtung 4 zugeordnet. Der Liftanlage 6 ist eine stationäre Steuerungsvorrichtung 7 zugeordnet, die den Betrieb der Liftanlage 6 steuert.

Die Pistenraupe 2 weist einen Fahrantrieb auf, mittels dessen ein Laufwerk der Pistenraupe 2 angetrieben wird, um die Pistenraupe vorwärts oder rückwärts zu bewegen und zu lenken. Heckseitig weist die Pistenraupe 2 eine verstellbare Heckfräse 13 auf. Frontseitig ist an der Pistenraupe 2 ein verstellbares Räumschild 14 angeordnet. Die Heckfräse 13 kann über eine Eintauchtiefe zur Bearbeitung einer Pistenoberfläche der Schneepiste 1 in eine die Pistenoberfläche ausbildende Schneedecke eintauchen. Die Heckfräse 13 weist wenigstens eine Fräswelle auf, die beim Bearbeiten der Schneedecke mit einer Fräswellengeschwindigkeit rotieren kann.

Der Schneepiste 1 ist schließlich ein Positionierungssystem 5 zugeordnet, das in der Darstellung gemäß Fig. 1 ein satellitengestütztes, globales Positionierungssystem 5 ist.

Auf der Pistenraupe 2 ist vorliegend eine Lidar-Sensorik 11 angeordnet. Eine weitere, stationäre Lidar-Sensorik 12 ist jeweils auf einer Schneeausbringungsstationen der Beschneiungsanlage 3 befestigt. Die Lidar-Sensorik 12 der Schneeausbringungsstationen dient zur Erfassung von Schneevolumina und Schneehöhenänderungen der Schneepiste 1. Die Lidar-Sensorik 11, die mobil auf der Pistenraupe 2 angeordnet ist, dient zur Erfassung von Schneeverfrachtungsvolumina, die durch das Räumschild 14 bewegt werden.

Anhand der Fig. 1 sind verschiedene gestrichelte Linien und Pfeile dargestellt, die Datenübertragungen oder Datenaustausch darstellen sollen. So überträgt das Positionierungssystem 5 Positions- und Fahrdaten der Pistenraupe 2 zu einem elektronischen Datenverarbeitungssystem VM, S, ASS. Die Wetterstation 10 überträgt meteorologische Daten MD zu dem elektronischen Datenverarbeitungssystem VM, S, ASS. Die Lidar-Sensorik 11 überträgt Sensordaten ebenfalls an das elektronische Datenverarbeitungssystem VM, S, ASS. Entsprechend umgekehrt werden Steuerungsdaten von dem elektronischen Datenverarbeitungssystem VM, S, ASS zu einer zentralen Steuereinheit der Pistenraupe 2 übertragen, um den Fahrantrieb und/oder eine Räumschildsteuerung und/oder eine Heckfräsensteuerung anzusteuern. Die Steuerungsvorrichtung 4 überträgt zum einen Sensordaten der stationären Lidar-Sensorik 12 zu dem elektronischen Datenverarbeitungssystem VM, S, ASS. Zum anderen leitet das elektronische Datenverarbeitungssystem VM, S, ASS Steuerungsdaten zu der Steuerungsvorrichtung 4, die zum Betrieb der Beschneiungsanlage 3 vorgesehen sind. Das Lichtschrankensystem 9 wie auch das Steuerungssystem 7 für die Liftanlage 6 liefern Daten über die Anzahl an Wintersport betreibenden Personen 8, die die Schneepiste 1 befahren oder in das Skigebiet gefördert werden. Das elektronische Datenverarbeitungssystem VM, S, ASS ist über eine Steuerleitung mit dem Steuerungssystem 7 gekoppelt, um bei Bedarf die Geschwindigkeit der Liftanlage 6 zu reduzieren, um hierdurch eine geringere Anzahl von Wintersport betreibenden Personen 8 in das Skigebiet zu fördern.

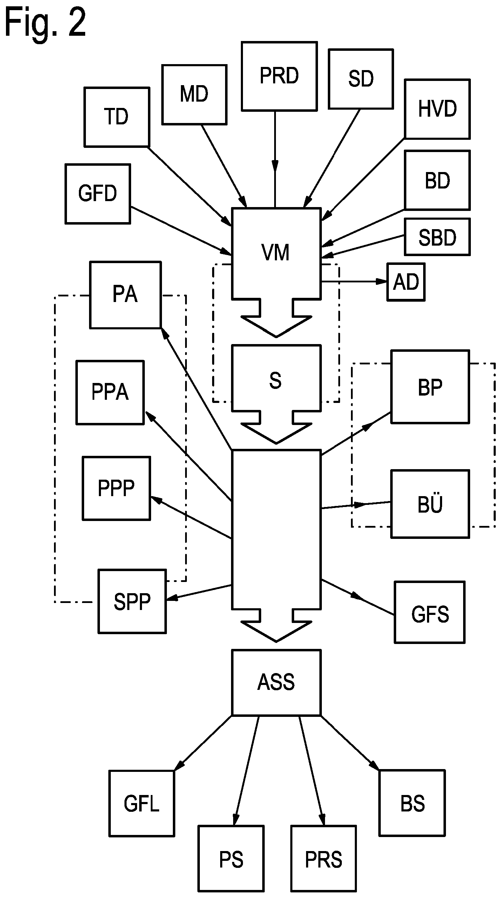

Anhand der Fig. 2 ist das computergestützte System zur Überwachung und Pflege einer Schneepiste etwas detaillierter dargestellt. Entsprechende Blöcke sind über Pfeile mit anderen Funktionsblöcken verbunden, wobei die Pfeilrichtungen den Informations- oder Datenfluss zwischen den einzelnen Blöcken darstellen. Im oberen Bereich des Blockschaubilds bedeutet die Abkürzung GFD Gästefrequenzdaten, die Abkürzung TD Topografiedaten, die Abkürzung MD meteorologische Daten, die Abkürzung PRD Pistenraupendaten, die Abkürzung SD Schneedaten, die Abkürzung HVD Schneehöhen- und -volumendaten, die Abkürzung BD Beschneiungsdaten und die Abkürzung SBD Schneebeschaffenheitsdaten.

In dem mittleren Bereich des Blockschaubilds bedeuten auf der linken Seite die Abkürzungen PA einen Pistenaufbau, PPA einen Pistenpräparieraufwand, PPP einen Pistenpräparierplan und SPP einen Schneepositionsplan. Auf der rechten Seite bedeutet der Block AD Ausgabedaten, der Block BP einen Beschneiungsplan, der Block BÜ eine Überwachung und Steuerung der Beschneiung einschließlich Positionierungen und Ausrichtungen der Schneeausbringungsstationen und die Steuerung des Wasseranteils des ausgebrachten Schnees, d.h. die Steuerung trockenen und nassen Schnees. Im unteren Bereich des Blockschaubilds bedeuten GFL eine Gästefrequenzlenkung, PS eine Pistenzugangssteuerung, PRS eine Pistenraupensteuerung und BS eine Beschneiungssteuerung. Unter den zentral untereinander angeordneten Abkürzungen VM, S und ASS ist insgesamt das zentrale elektronische Datenverarbeitungssystem zu verstehen, wobei der obere Block VM das errechnete Vorhersagemodell, S den Block für Steuerungsanweisungen und ASS ein automatisiertes Assistenzsystem symbolisieren.

Das elektronische Datenverarbeitungssystem VM, S, ASS weist einen nicht näher bezeichneten Speicher auf, in dem Soll-Daten für einen oder mehrere optimierte Zustände von Schneepisten 1 abgelegt sind, wobei die Soll-Daten nach den verschiedenen Ist-Daten gegliedert sind, die entsprechende Eingangsgrößen für das elektronische Datenverarbeitungssystem VM, S, ASS sind, d.h. Topografiedaten TD, meteorologische Daten MD, Daten über eine Frequentierung der Schneepiste durch Wintersport betreibende Personen GFD, Schneebeschaffenheitsdaten SD, SBD einer Pistenoberfläche, Fahrparameterdaten und Prozessparameterdaten, d.h. Pistenraupendaten PRD, Schneehöhen- und Schneevoluminadaten HVD. Nicht dargestellt ist die Zeiterfassungseinheit, die den entsprechenden Sensoriken zugeordnet wird, um eine zeitabhängige Erfassung der Sensordaten zu gewährleisten. Das elektronische Datenverarbeitungssystem VM, S, ASS verarbeitet die Sensordaten anhand zeitabhängiger Datenveränderungen und berechnet die Veränderung der Sensordaten zeitabhängig in die Zukunft unter Bildung des Vorhersagemodells VM. Ergänzt werden kann die Berechnung durch einen Vergleich mit den genannten Soll-Daten, um anschließend konkrete Steuerungsanweisungen zur Aufrechterhaltung oder zur Angleichung an einen optimierten Pistenzustand der Schneepiste 1 ausgeben zu können. Die die Ausgabedaten AD ausgebende Ausgabeeinheit ist vorzugsweise digital gestaltet und kann als Schnittstelle für ein Ausgabegerät oder auch als Endgerät ausgeführt sein. Unter GFS ist die Gästefrequenzsteuerung zu verstehen, d.h. eine Handlungsanweisung an einen Betreiber der Liftanlage 6, die zu befördernde Personenzahl zu erhöhen oder zu reduzieren.

Um das errechnete Vorhersagemodell VM in der Praxis einem gewünschten, optimierten Pistenzustand der Schneepiste 1 entsprechenden Sollmodell angleichen zu können, können gegenüber einfachen Informationen komplexere Handlungsanweisungen ausgegeben werden, die auf der linken Seite in Fig. 2 unterschiedliche Pläne für den Einsatz der Pistenraupe 2 und auf der rechten Seite Pläne für den Einsatz der Beschneiungsanlage 3 umfassen. Demzufolge ist eine strichpunktierte Klammer dargestellt für Handlungsanweisungen oder Pläne, die der Pistenraupe 2 zugeordnet sind, und eine weitere strichpunktierte Klammer für Handlungsanweisungen oder Pläne, die für den Betrieb der Beschneiungsanlage 3 vorgesehen sind.

Im unteren Bereich des Blockschaubilds ist eine weitere Ausbaustufe gezeigt. Denn das automatisierte Assistenzsystem ASS nimmt aktiv Ansteuerungen vor zur Gästefrequenzlenkung GFL, d.h. gemäß Fig. 1 zur Steuerung der Geschwindigkeit der Liftanlage 6, zur Steuerung des Pistenzugangs PS über nicht dargestellte Signalgeber, Ampeln, Sperren oder digitale Informationstafeln. Zudem wird aktiv der Betrieb der Pistenraupe 2 gesteuert durch geeignete Ansteuerungen der Heckfräse 13 und des Räumschilds 14, um eine gewünschte Pistenoberfläche und eine gewünschte Schneeverfrachtung zu erzielen. Schließlich wird die Steuerungsvorrichtung 4 der Beschneiungsanlage 3 aktiv angesteuert, um die Schneeausbringungsstationen entsprechend auszurichten, den Durchsatz der Schneeausbringungsstationen zu erhöhen oder zu reduzieren und den Wasseranteil zu steuern, um die Feuchtigkeit des ausgebrachten Schnees zu reduzieren oder zu erhöhen. Diese Ansteuerungen erfolgen ebenfalls durch einen Vergleich mit im elektronischen Datenverarbeitungssystem VM, S, ASS abgelegten Soll-Daten oder Soll-Modellen, die den optimierten Pistenzustand darstellen.

Die Zählung von Personen 8, die die Liftanlage 6 benutzen, kann durch das Scannen von Tickets erfolgen. Alternativ oder ergänzend kann auch eine stationäre, sektorweise Erfassung von Mobiltelefonnutzern im Skigebiet oder im Bereich der Schneepiste 1 vorgenommen werden. Die Daten, die über die Beschneiungsanlage 3 erfasst werden, können den Ort der Schneeausbringungsstationen, physikalische Betriebsdaten der Schneeausbringungsstationen wie Wasserdurchsatz, Betriebszeiten, Abwurfwinkel, Wassertemperatur, Schwenkwinkel, Neigungswinkel, Luftdurchsatz und eingestellte Schneequalität umfassen.

Unter dem Zustand der Schneepiste 1 ist insbesondere der Verschleißgrad als Maß für die Abnutzung durch Personen 8 oder Umwelteinflüsse zu verstehen, insbesondere buckelige und ausgefahrene Pistenoberflächen. Eine natürliche Topografie der Schneepiste weist vorzugsweise die gleiche Topografie auf wie der darunterliegende Berghang, der durch den Schnee bedeckt ist. Der Aufwand zur Präparierung einer ausgefahrenen Schneepiste betrifft insbesondere die Glättung von Unebenheiten und den Ausgleich unterschiedlicher Schneehöhen an unterschiedlichen Stellen der Schneepiste. Auch der Aufbau der Schneepiste, d.h. unterschiedliche Schneehärten wie insbesondere unten Eis und oben Sulz, oder in sich homogen mit gleicher Härte, vorteilhaft eisig oder griffig, können als Ist-Werte erfasst oder als Soll-Werte vorgegeben werden. Hierdurch müssen Ist-Daten des Pistenaufbaus, zurückliegende Wetterdaten, zurückliegende Gästefrequenzdaten und zugrundeliegende Topografiedaten TD verwendet werden.

Handlungsempfehlungen des elektronischen Datenverarbeitungssystems VM, S, ASS ermöglichen die Einleitung von Maßnahmen, um Pistenbedingungen über einen definierten Zeitraum konstant zu halten. Konkret wird bei zu weicher Pistenoberfläche harter Schnee hinzugegeben, bei zu harter Pistenoberfläche wird weicher Schnee hinzugegeben. Falls die Pistenoberfläche zu trocken ist, d.h. zu pulvrig, wird durch den Eintrag von Wasser die Dichte erhöht, wodurch die Pistenoberfläche haltbarer gemacht wird. Aus Wettervorhersagen, Pistenzustand und Schneehöhenwunsch wird ein Plan für die Beschneiung erstellt, wo, wann, wieviel und welche Qualität an Schnee erzeugt werden muss. Informationen für Wintersport betreibende Personen 8 im Skigebiet können über Anzeigetafeln, über Skigebiets-Apps, über eine Website des Skigebiets oder über soziale Medien ausgegeben werden. Dabei können den Personen 8, die Gäste des Skigebiets sind, auch Schneepistenzustandsbeschreibungen wie ein Verschleißgrad und die Gästeauslastung entsprechender Schneepisten 1 übermittelt werden. Hierdurch wird in einfacher Weise eine Besucherstromlenkung erzielt, die eine gleichmäßige Schneepistenauslastung ermöglichen.

Pistenpräparierpläne, Routenplanungen und Prozesspläne für den Betrieb der Pistenraupe 2 können drahtlos auf die Pistenraupe 2 übertragen und dem Fahrer der Pistenraupe 2 zur Verfügung gestellt werden. Prozessparameter für die Heckfräse 13 und das Räumschild 14 können durch das elektronische Datenverarbeitungssystem automatisiert der zentralen Steuerung der Pistenraupe 2 vorgegeben werden.

Alternativ kann die Pistenraupe 9 auch fahrerlos autonom gelenkt werden anhand entsprechender Vorgaben des elektronischen Datenverarbeitungssystems VM, S, ASS.

Das computergestützte System der Fig. 1 und 2 weist eine Zustandssensorik zum Aufnehmen von Zustandsdaten der Schneepiste 1 auf. Die Zeiterfassungseinheit ist mit der Zustandssensorik gekoppelt, um die Zustandsdaten zeitabhängig zu erfassen. Die Zustandssensorik umfasst wenigstens eine Sensorik 15 zum Aufnehmen von Schneebeschaffenheitsdaten SBD der Pistenoberfläche der Schneepiste 1. Das elektronische Datenverarbeitungssystem VM, S, ASS ist mit der Zustandssensorik und mit der Zeiterfassungseinheit gekoppelt, um die Zustandsdaten zu erfassen und hieraus das Vorhersagemodell VM für den Zustand der Schneepiste 1 zu wenigstens einem in der Zukunft liegenden Zeitpunkt zu errechnen. Die Ausgabeeinheit AD ist an das Datenverarbeitungssystem VM, S, ASS angeschlossen und gibt Informationen über das errechnete Vorhersagemodell VM aus. Vorliegend umfasst die Zustandssensorik ferner eine Sensorik zur Erfassung von Beschneiungsdaten BD der Schneepiste 1 sowie eine Sensorik zur Erfassung von Topografiedaten TD der Schneepiste 1. Bei diesen Sensoriken kann es sich um die an der Pistenraupe 2 und an den Schneeausbringungsstationen der Beschneiungsanlage 3 vorhandenen Lidar-Sensoren 11, 12 handeln. Die Zeiterfassungseinheit ist mit der jeweiligen Sensorik gekoppelt, um die Beschneiungsdaten BD, die Topografiedaten TD und die Schneebeschaffenheitsdaten SBD zeitabhängig zu erfassen. Das elektronische Datenverarbeitungssystem VM, S, ASS ist mit den Sensoriken und der Zeiterfassungseinheit gekoppelt, um die Daten zu erfassen und hieraus das Vorhersagemodell VM für einen Zustand der Schneepiste 1 zu wenigstens einem in der Zukunft liegenden Zeitpunkt zu errechnen.

Die Pistenraupe 2 des computergestützten Systems umfasst vorliegend eine Sensorik 15 zum Aufnehmen der Schneebeschaffenheitsdaten SBD. Diese Sensorik 15 ist fahrzeugfest an der Pistenraupe 2 angeordnet. Beispielsweise ist die Sensorik 15 an einer nicht näher dargestellten, beispielsweise als Schwert, ausgebildeten Eindringvorrichtung der Pistenraupe 2 angeordnet. Dieses Schwert ist dazu eingerichtet, beim Befahren der Pistenoberfläche in einer im Wesentlichen gleichbleibenden Tiefe in die Pistenoberfläche einzutauchen und durch die Schneedecke der Schneepiste 1 gezogen zu werden. Dabei nimmt die Sensorik 15 die Schneebeschaffenheitsdaten SBD auf. Alternativ oder zusätzlich kann wenigstens eine an der Pistenraupe 2 angeordnete Sensorik zum Aufnehmen von Körperschallfrequenzen eingerichtet sein. Solche Körperschallfrequenzen werden beim Präparieren der Schneepiste 1 mittels der Pistenraupe 2 in Abhängigkeit zu der Beschaffenheit der Pistenoberfläche auf die Pistenraupe 2 übertragen. Durch das Aufnehmen der Körperschallfrequenzen lässt sich also die Beschaffenheit der Schneedecke, insbesondere berührungslos, ermitteln. Entsprechend dient die Sensorik zum Aufnehmen der Körperschallfrequenzen der Aufnahme der Schneebeschaffenheitsdaten SBD.

Alternativ oder zusätzlich kann das computergestützte System außerdem eine in den Figuren nicht gezeigte Sensorik zum Aufnehmen der Schneebeschaffenheitsdaten SBD umfassen, die an der Pistenoberfläche angeordnet ist. Beispielsweise kann eine derartige Sensorik in einer Schneedecke der Pistenoberfläche eingebettet sein. Es versteht sich, dass mehrere derartiger Sensoriken netzartig oder clusterartig über die Pistenoberfläche verteilt sein können.

Vorliegend ist wenigstens eine Sensorik zur kontinuierlichen oder zeitlich getakteten Aufnahme der Zustandsdaten eingerichtet. Entsprechend werden die Schneebeschaffenheitsdaten SBD kontinuierlich oder zeitlich getaktet aufgenommen. Das elektronische Datenverarbeitungssystem VM, S, ASS weist eine Schnittstelle für einen Anschluss an eine Erfassungseinheit meteorologischer Daten MD auf. Mittels dieser Schnittstelle kann das Datenverarbeitungssystem VM, S, ASS an die Wetterstation 10 datenübertragend angekoppelt sein. Der Pistenraupe 2 ist vorliegend eine elektronische Datenerfassungseinheit zugeordnet, mit welcher das elektronische Datenverarbeitungssystem VM, S, ASS drahtlos gekoppelt ist. Die elektronische Datenerfassungseinheit erfasst Positionsdaten und/oder Fahrdaten der Pistenraupe 2 und/oder Prozessparameter der Heckfräse 13 und des Räumschilds 14 der Pistenraupe 2. Das elektronische Datenverarbeitungssystem VM, S, ASS ist zudem mit einer Steuereinheit der Pistenraupe 2 drahtlos verbunden, um der Steuereinheit Steueranweisungen zur Ansteuerung eines Fahrantriebs und/oder einer Heckfräsensteuerung und/oder einer Räumschildsteuerung zu übermitteln.

Das elektronische Datenverarbeitungssystem VM, S, ASS ist drahtlos oder drahtgebunden mit einer stationären Zähleinrichtung gekoppelt. Diese stationäre Zähleinrichtung dient zur direkten oder indirekten Erfassung von Wintersport betreibenden Personen 8, die die Schneepiste 1 frequentieren. Das elektronische Datenverarbeitungssystem VM, S, ASS ist drahtlos oder drahtgebunden mit der Steuereinrichtung 4 der Beschneiungsanlage 3 gekoppelt, um der Steuereinrichtung 4 Steuerungsanweisungen für eine Beschneiung zu übermitteln.

Das in den Fig. 1 und 2 illustrierte computergestützte System dient zur Durchführung eines erfindungsgemäßen computergestützten Verfahrens zur Pflege der Schneepiste 1. Dabei ist in Figur 1 die das System bei der Durchführung des computergestützten Verfahrens gezeigt. Gemäß dem Verfahren werden zeitabhängig Zustandsdaten der Schneepiste 1 erfasst. Die Zustandsdaten umfassen Schneebeschaffenheitsdaten SBD, die von der Beschaffenheit der Pistenoberfläche der Schneepiste 1 abhängen. Aus den erfassten Zustandsdaten wird das Vorhersagemodell VM für den Zustand der Schneepiste 1 zu wenigstens einem in der Zukunft liegenden Zeitpunkt errechnet. Gemäß dem Verfahren werden ferner Informationen AD über das Vorhersagemodell VM ausgegeben. Beispielsweise umfassen die Zugangsdaten - zusätzlich zu den Schneebeschaffenheitsdaten SBD - Beschneiungsdaten BD der Schneepiste 1 und Topografiedate TD der Schneepiste 1. Die Beschneiungsdaten BD, die Topografiedaten TD und die Schneebeschaffenheitsdaten SBD werden jeweils zeitabhängig erfasst. Die Schneebeschaffenheitsdaten SBD werden vorliegend mittels wenigstens einer Pistenraupe 2 in einem Fahrbetrieb der wenigstens einen Pistenraupe 2 aufgenommen. Die Schneebeschaffenheitsdaten SBD können mittels der wenigstens einen Pistenraupe 2 aufgenommen werden, während die Schneepiste 1 mittels der Pistenraupe 2 präpariert wird. Von der an der Pistenraupe 1 angeordneten Sensorik 15 wird für die Aufnahme der Schneebeschaffenheitsdaten SBD eine Schneehärte oder/und eine Schneetemperatur oder/und ein Wasseranteil der Pistenoberfläche aufgenommen.

Gemäß dem Verfahren werden zeitabhängig Daten über die Frequentierung der Schneepiste 1 durch Wintersport betreibende Personen 8 erfasst. Diese Daten werden zur Errechnung des Vorhersagemodells VM verwendet. Ausgehend von dem Vorhersagemodell VM werden Steuerungsanweisungen S zum Betreiben der wenigstens einen Pistenraupe 2 auf der Schneepiste 1 erzeugt. Alternativ oder zusätzlich werden ausgehend von dem Vorhersagemodell VM Steuerungsanweisungen S zum Betreiben der Beschneiungsanlage 3 erzeugt. Alternativ oder zusätzlich werden ausgehend von dem Vorhersagemodell VM Steuerungsanweisungen S zum Zugang von Wintersport betreibenden Personen 8 zu der Schneepiste 1 erzeugt. Die Steuerungsanweisungen S werden ausgegeben. Die Steuerungsanweisungen S können beispielsweise an den Fahrer der wenigstens einen Pistenraupe 2, Betriebspersonal der Beschneiungsanlage 3 und Betriebspersonal der Liftanlage 6 ausgegeben werden. Die Steuerungsanweisungen S können entsprechend an die Pistenraupe 2 oder/und die Beschneiungsanlage 3 oder/und an stationäre Vorrichtungen 6 zur Steuerung des Zugangs von Wintersport betreibenden Personen 8 zur Schneepiste 1 geleitet werden.

Das computergestützte Verfahren sieht ferner vor, dass in Abhängigkeit zu den Steuerungsanweisungen S die Beschaffenheit der Pistenoberfläche wenigstens bereichsweise mittels der wenigstens einen Pistenraupe 2 angepasst wird. Alternativ oder zusätzlich wird die Beschaffenheit der Pistenoberfläche mittels der Beschneiungsanlage 3 angepasst. Beispielsweise erfolgt ein derartiges Anpassen der Beschaffenheit der Pistenoberfläche bedarfsgerecht. Das heißt, die Pistenoberfläche wird nur an den Stellen und nur in dem Umfang angepasst, an welchen dies gemäß dem Vorhersagemodell VM für eine gleichbleibend gute Pistenbeschaffenheit erforderlich ist. Durch die Steuerungsanweisungen S können also in Abhängigkeit des Vorhersagemodells VM Schubarbeiten mittels der Pistenraupe 2, ein Präparierzeitpunkt sowie ein situativer Einsatz von Beschneiung aufeinander abgestimmt werden, um einen möglichst optimalen Pistenzustand zu erreichen und aufrechtzuerhalten.

Beim Erfassen der Schneebeschaffenheitsdaten SBD werden zeitabhängige Datensätze der Schneebeschaffenheitsdate SBD erzeugt. Diese Datensätze umfassen je Erfassung einander zugeordnete Zeitdaten, geografische Ortsdaten und Qualitätsdaten der Pistenoberfläche. Dabei können den Qualitätsdaten je Erfassung Tiefenordinaten zugeordnet werden. Die Schneebeschaffenheitsdaten SBD geben somit wieder, in welcher Schneetiefe zu welchem Zeitpunkt und an welchem geografischen Ort welche Qualitätsdaten vorliegen. Die Qualitätsdaten können dabei eine Schneehärte oder/und eine Schneetemperatur oder/und eine Schneedichte oder/und einen Wasseranteil umfassen. Entsprechend können die Schneebeschaffenheitsdaten SBD angeben, zu welcher Zeit, an welchem Ort und in welcher Tiefe eine bestimmte Schneehärte, eine bestimmte Schneetemperatur, eine bestimmte Schneedichte oder/und ein bestimmter Wasseranteil in der Schneedecke der Pistenoberfläche vorliegt. Die Erfassung der Schneebeschaffenheitsdaten kann punktuell an verschiedenen Stellen der Schneepiste erfolgen. Durch das Vorhersagemodell lässt sich aus den einzelnen Erfassungen eine Aussage über die Schneebeschaffenheit an der gesamten Pistenoberfläche errechnen. Insbesondere umfasst das Vorhersagemodell dabei auch Verläufe in der Schneebeschaffenheit über die Pistenoberfläche. Anhand der Schneebeschaffenheitsdaten lässt sich die Beschaffenheit der Schneedecke bewerten mit Beschaffenheitsattributen wie "pulverig", "vereist", "verharscht", "griffig" oder sulzig". Solche Beschaffenheitsattribute können ebenfalls in Abhängigkeit von einer Schneetiefe zugewiesen werden.

Die Zustandsdaten umfassen beispielsweise Schneehöhen- und -volumendaten HVD der Schneepiste 1 oder/und Topografiedaten TD der Schneepiste 1. Gemäß dem Verfahren können zudem zeitabhängig aktuelle oder/und zukünftige meteorologische Daten MD für eine Umgebung der Schneepiste 1 erfasst und zur Errechnung des Vorhersagemodells VM verwendet werden. Außerdem können zeitabhängig Fahrparameter oder/und Prozessparameter wenigstens einer die Schneepiste 1 präparierenden Pistenraupe 2 erfasst und zur Errechnung des Vorhersagemodells VM verwendet werden. Die Zustandsdaten der Schneepiste 1 können mittels einer Anzeigeeinrichtung angezeigt werden. Eine derartige Anzeigeeinrichtung kann eine virtuelle Karte umfassen, auf welcher dargestellt wird, an welchem geografischen Ort welche Beschaffenheit der Schneepiste 1 vorzufinden ist. Anhand des Vorhersagemodells VM kann zudem angezeigt werden, an welchem Ort der Schneepiste 1 zu wenigstens einem in der Zukunft liegenden Zeitpunkt welche Beschaffenheit der Schneepiste 1 vorzufinden sein wird. In dieser Vorhersage kann bei ansonsten gegebenen Randbedingungen ein zu erwartende Entwicklung der meteorologischen Daten MD und eine darauf abgestimmte Präparierung der Schneepiste 1 und eine zu erwartende Frequentierung der Schneepiste 1 berücksichtigt werden. Das computergestützte System kann eine stationäre Vorrichtung zur Steuerung einer Frequentierung der Schneepiste 1 umfassen. Mit dieser Vorrichtung kann das elektronische Datenverarbeitungssystem VM, S, ASS drahtlos oder drahtgebunden gekoppelt sein, um Steuerungsanweisungen zur Veränderung der Frequentierung der Schneepiste 1 zu übermitteln.

Vorliegend wird die Pistenraupe 2 in Abhängigkeit von den erfassten zeitabhängigen Schneebeschaffenheitsdaten SBD gesteuert. Dabei können Informationen zur Steuerung des Fahrwegs oder/und von Funktionsparametern der Heckfräse 13 oder/und des Räumschilds 14 an den Fahrer der Pistenraupe 2 oder/und an ein autonomes Steuersystem für die Pistenraupe 2 ausgegeben werden. Beispielsweise können entsprechende Informationen über die Eintauchtiefe der Heckfräse 13 oder/und die Fräswellengeschwindigkeit ausgegeben werden. Auch eine automatische Steuerung der Eintauchtiefe der Heckfräse 13 oder/und der Fräswellengeschwindigkeit oder/und einer Stellung des Räumschilds 14 oder/und eines Fahrwegs sowie einer Fahrgeschwindigkeit der Pistenraupe 2 ist denkbar.

## Patentansprüche

1. Computergestütztes Verfahren zur Pflege einer Schneepiste (1), gemäß welchem zeitabhängig Zustandsdaten der Schneepiste (1) erfasst werden, wobei
die Zustandsdaten Schneebeschaffenheitsdaten (SBD) umfassen, die von einer Beschaffenheit einer Pistenoberfläche der Schneepiste (1) abhängen, und wobei
aus den erfassten Zustandsdaten ein Vorhersagemodell (VM) für den Zustand der Schneepiste (1) zu wenigstens einem in der Zukunft liegenden Zeitpunkt errechnet wird, und wobei
Informationen (AD) über das Vorhersagemodell (VM) ausgegeben werden, **dadurch gekennzeichnet, dass** als Schneebeschaffenheitsdaten (SBD) eine Schneehärte und/oder eine Schneetemperatur und/oder ein Wasseranteil mittels wenigstens einer von an der wenigstens einen Pistenraupe (2) angeordneten Sensoriken (15) in einem Fahrbetrieb der wenigstens einen Pistenraupe aufgenommen werden, insbesondere während die Schneepiste (1) mittels der Pistenraupe (2) präpariert wird.

2. Computergestütztes Verfahren nach Anspruch 1, **dadurch gekennzeichnet, dass** zeitabhängig Daten über eine Frequentierung der Schneepiste (1) durch Wintersport betreibende Personen (8) erfasst und zur Errechnung des Vorhersagemodells (VM) verwendet werden.

3. Computergestütztes Verfahren nach Anspruch 1 oder 2, **dadurch gekennzeichnet, dass** die Zustandsdaten Beschneiungsdaten (BD) der Schneepiste (1) und Topografiedaten (TD) der Schneepiste (1) umfassen, wobei die Beschneiungsdaten (BD), die Topografiedaten (TD) und die Schneebeschaffenheitsdaten (SBD) jeweils zeitabhängig erfasst werden.

4. Computergestütztes Verfahren nach einem der vorhergehenden Ansprüche, **dadurch gekennzeichnet, dass** ausgehend von dem Vorhersagemodell (VM) Steuerungsanweisungen (S) zum Betreiben der wenigstens einen Pistenraupe (2) auf der Schneepiste (1) oder/und zum Betreiben einer Beschneiungsanlage (3) für die Schneepiste (1) oder/und zum Zugang von Wintersport betreibenden Personen (8) zu der Schneepiste (1) erzeugt werden, wobei vorzugsweise die Steuerungsanweisungen (S) ausgegeben werden.

5. Computergestütztes Verfahren nach Anspruch 4, **dadurch gekennzeichnet, dass** die Steuerungsanweisungen (S) an die Pistenraupe (2) und/oder die Beschneiungsanlage (3) und/oder an stationäre Vorrichtungen (6) zur Steuerung des Zugangs von Wintersport betreibenden Personen (8) zu der Schneepiste (1) geleitet werden und/oder dass in Abhängigkeit zu den Steuerungsanweisungen (S) die Beschaffenheit der Pistenoberfläche wenigstens bereichsweise, insbesondere bedarfsgerecht, mittels der wenigstens einen Pistenraupe (2) oder/und der Beschneiungsanlage (3) angepasst wird.

6. Computergestütztes Verfahren nach einem der vorhergehenden Ansprüche, **dadurch gekennzeichnet, dass** beim Erfassen der Schneebeschaffenheitsdaten (SBD) zeitabhängige Datensätze der Schneebeschaffenheitsdaten (SBD) erzeugt werden, die je Erfassung einander zugeordnete Zeitdaten, geographische Ortsdaten und Qualitätsdaten der Pistenoberfläche umfassen, wobei den Qualitätsdaten vorzugsweise je Erfassung Tiefenordinatendaten zugeordnet werden, wobei vorzugsweise die Qualitätsdaten eine Schneehärte oder/und eine Schneetemperatur oder/und eine Schneedichte oder/und einen Wasseranteil umfassen und/oder dass die Zustandsdaten Schneehöhen- und -volumendaten (HVD) der Schneepiste (1) oder/und Topografiedaten (TD) der Schneepiste (1) umfassen.

7. Computergestütztes Verfahren nach einem der vorhergehenden Ansprüche, **dadurch gekennzeichnet, dass** zeitabhängig aktuelle oder/und zukünftige meteorologische Daten (MD) für eine Umgebung der Schneepiste (1) erfasst und zur Errechnung des Vorhersagemodells (VM) verwendet werden und/oder dass zeitabhängig Fahrparameter oder/und Prozessparameter wenigstens einer die Schneepiste (1) präparierenden Pistenraupe (2) erfasst und zur Errechnung des Vorhersagemodells (VM) verwendet werden, und/oder dass die erfassten Zustandsdaten mittels einer Anzeigeeinrichtung angezeigt werden und/oder dass die wenigstens eine Pistenraupe (2) in Abhängigkeit von den erfassten zeitabhängigen Schneebeschaffenheitsdaten (SBD) gesteuert wird.

8. Computergestütztes Verfahren nach einem der vorhergehenden Ansprüche, **dadurch gekennzeichnet, dass** Informationen zur Steuerung des Fahrwegs oder/und von Funktionsparametern einer Heckfräse (13) oder/und eines Räumschilds (14), insbesondere der Eintauchtiefe der Heckfräse (13) oder/und der Fräswellengeschwindigkeit, an den Fahrer der Pistenraupe (2) oder/und an ein autonomes Steuersystem für die Pistenraupe (2) ausgegeben werden.

9. Computergestütztes System zur Durchführung eines Verfahrens nach einem der vorhergehenden Ansprüche,
mit einer Zustandssensorik zum Aufnehmen von Zustandsdaten einer Schneepiste, und
mit einer Zeiterfassungseinheit, die mit der Zustandssensorik gekoppelt ist, um die Zustandsdaten zeitabhängig zu erfassen, wobei
die Zustandssensorik wenigstens eine Sensorik (15) zum Aufnehmen von Schneebeschaffenheitsdaten (SBD) der Pistenoberfläche der Schneepiste (1) umfasst, und wobei
ein elektronisches Datenverarbeitungssystem (VM, S, ASS) vorgesehen ist, das mit der Zustandssensorik und der Zeiterfassungseinheit gekoppelt ist, um die Zustandsdaten zu erfassen und hieraus das Vorhersagemodell (VM) für den Zustand der Schneepiste (1) zu wenigstens einem in der Zukunft liegenden Zeitpunkt zu errechnen, und wobei
an das Datenverarbeitungssystem (VM, S, ASS) eine Ausgabeeinheit (AD) angeschlossen ist, die Informationen über das errechnete Vorhersagemodell (VM) ausgibt, **dadurch gekennzeichnet, dass** das System wenigstens eine Pistenraupe (2) umfasst, wobei wenigstens eine der Sensoriken (15) zum Aufnehmen der Schneebeschaffenheitsdaten (SBD) in Form von Schneehärte und/oder Schneetemperatur und/oder Wasseranteil der Pistenoberfläche an der Pistenraupe (2) angeordnet ist.

10. Computergestütztes System nach Anspruch 9, **dadurch gekennzeichnet, dass** die Zustandssensorik eine Sensorik zur Erfassung von Beschneiungsdaten (BD) der Schneepiste (1) und eine Sensorik zur Erfassung von Topografiedaten (TD) der Schneepiste (1) umfasst, wobei die Zeiterfassungseinheit mit der jeweiligen Sensorik gekoppelt ist, um die Beschneiungsdaten (BD), die Topografiedaten (TD) und die Schneebeschaffenheitsdaten (SBD) zeitabhängig zu erfassen, wobei das elektronische Datenverarbeitungssystem (VM, S, ASS) mit den Sensoriken und der Zeiterfassungseinheit gekoppelt ist, um die Daten zu erfassen und hieraus das Vorhersagemodell (VM) für einen Zustand der Schneepiste (1) zu wenigstens einem in der Zukunft liegenden Zeitpunkt zu errechnen.

11. Computergestütztes System nach Anspruch 9, **dadurch gekennzeichnet, dass** wenigstens eine an der Pistenraupe (2) angeordnete Sensorik (15) an einer Eindringvorrichtung der Pistenraupe (2) angeordnet ist, die dazu eingerichtet ist, beim Befahren der Pistenoberfläche in im Wesentlichen gleichbleibender Tiefe in die Pistenoberfläche einzutauchen und durch die Schneedecke gezogen zu werden und/oder dass wenigstens eine an der Pistenraupe (2) angeordnete Sensorik zum Aufnehmen von Körperschallfrequenzen eingerichtet ist, die beim Präparieren der Schneepiste (1) mittels der Pistenraupe (2) in Abhängigkeit zu der Beschaffenheit der Pistenoberfläche auf die Pistenraupe (2) übertragen werden, um Schneebeschaffenheitsdaten (SBD) aufzunehmen.

12. Computergestütztes System nach einem der Ansprüche 9 bis 11, **dadurch gekennzeichnet, dass** wenigstens eine Sensorik zum Aufnehmen der Schneebeschaffenheitsdaten (SBD) an der Pistenoberfläche angeordnet, insbesondere in einer Schneedecke der Pistenoberfläche eingebettet, ist.

13. Computergestütztes System nach einem der Ansprüche 9 bis 12, **dadurch gekennzeichnet, dass** wenigstens eine Sensorik zur kontinuierlichen oder zeitlich getakteten Aufnahme der Zustandsdaten, insbesondere der Schneebeschaffenheitsdaten (SBD), eingerichtet ist und/oder dass das elektronische Datenverarbeitungssystem (VM, S, ASS) eine Schnittstelle für einen Anschluss an eine Erfassungseinheit meteorologischer Daten (MD) aufweist und/oder dass das elektronische Datenverarbeitungssystem (VM, S, ASS) drahtlos mit einer elektronischen Datenerfassungseinheit gekoppelt ist, die der wenigstens einen Pistenraupe (2) zugeordnet ist und Positionsdaten und/oder Fahrdaten der Pistenraupe (2) und/oder Prozessparameter der Heckfräse (13) und des Räumschilds (14) der Pistenraupe (2) erfasst.

14. Computergestütztes System nach einem der Ansprüche 9 bis 13, **dadurch gekennzeichnet, dass** das elektronische Datenverarbeitungssystem (VM, S, ASS) drahtlos oder drahtgebunden mit einer stationären Zähleinrichtung zur direkten oder indirekten Erfassung von Wintersport betreibenden Personen (8), die die Schneepiste (1) frequentieren, gekoppelt ist und/oder dass das System wenigstens eine stationäre Beschneiungsanlage (3) umfasst, die der Schneepiste (1) zugeordnet ist, wobei das elektronische Datenverarbeitungssystem (VM, S, ASS) drahtlos oder drahtgebunden mit einer Steuereinrichtung (4) der Beschneiungsanlage (3) gekoppelt ist, um der Steuereinrichtung (4) Steuerungsanweisungen für eine Beschneiung zu übermitteln und/oder dass das elektronische Datenverarbeitungssystem (VM, S, ASS) mit einer Steuereinheit der Pistenraupe (2) drahtlos verbunden ist, um der Steuereinheit Steuerungsanweisungen zur Ansteuerung eines Fahrantriebs und/oder einer Heckfräsensteuerung und/oder einer Räumschildsteuerung zu übermitteln und/oder dass eine stationäre Vorrichtung zur Steuerung einer Frequentierung der Schneepiste (1) vorgesehen ist, wobei das elektronische Datenverarbeitungssystem (VM, S, ASS) drahtlos oder drahtgebunden mit der Vorrichtung gekoppelt ist, um Steuerungsanweisungen zur Veränderung der Frequentierung der Schneepiste (1) zu übermitteln.

## Claims

1. A computer-assisted method for grooming of a snow piste (1), according to which state data of the snow piste (1) is captured time-dependently, wherein
the state data comprises snow condition data (SBD) which depends on a condition of a piste surface of the snow piste (1), and wherein
a prediction model (VM) for the state of the snow piste (1) at at least one point in time in the future is calculated from the state data captured, and wherein
information (AD) is output via the prediction model (VM), **characterized in that** a snow hardness and/or a snow temperature and/or a water proportion are recorded as snow condition data (SBD) by means of at least one of the sensor systems (15) arranged on the at least one piste grooming vehicle (2) during driving operation of the at least one piste grooming vehicle, in particular while the snow piste (1) is being prepared by means of the piste grooming vehicle (2).

2. The computer-assisted method according to claim 1, **characterized in that** data is captured time-dependently from the frequenting of the snow piste (1) by persons (8) engaged in winter sports and is used for calculating the prediction model (VM).

3. The computer-assisted method according to claim 1 or 2, **characterized in that** the state data comprises snow coverage data (BD) of the snow piste (1) and topographical data (TD) of the snow piste (1), wherein the snow coverage data (BD), the topographical data (TD) and the snow condition data (SBD) are each captured time-dependently.

4. The computer-assisted method according to any of the preceding claims, **characterized in that** starting from the prediction model (VM), control commands (S) are generated for operating the at least one piste grooming vehicle (2) on the snow piste (1) or/and for operating a snow-making system (3) for the snow piste (1) or/and for controlling access to the snow piste (1) by persons (8) engaged in winter sports, wherein the control commands (S) are preferably output.

5. The computer-assisted method according to claim 4, **characterized in that** the control commands (S) are passed to the piste grooming vehicle (2) and/or to the snow-making system (3) and/or to stationary devices (6) for controlling access to the snow piste (1) by persons (8) engaged in winter sports, and/or **in that** the condition of the piste surface is adapted, depending on the control commands (S), at least in some areas, in particular based on need, by means of the at least one piste grooming vehicle (2) or/and by means of the snow-making system (3).

6. The computer-assisted method according to any of the preceding claims, **characterized in that** when the snow condition data (SBD) is captured, time-dependent data sets of the snow condition data (SBD) are generated which comprise per capture time data, geographical location data and quality data, associated with one another, of the piste surface, wherein depth ordinate data is associated with the quality data preferably per capture, wherein the quality data preferably comprises a snow hardness or/and a snow temperature or/and a snow density or/and a water proportion, and/or **in that** the state data comprises snow height and volume data (HVD) of the snow piste (1) or/and topographical data (TD) of the snow piste (1).

7. The computer-assisted method according to any of the preceding claims, **characterized in that** current or/and future meteorological data (MD) for surroundings of the snow piste (1) is obtained time-dependently and used for calculating the prediction model (VM), and/or **in that** driving parameters or/and process parameters of at least one piste grooming vehicle (2) preparing the snow piste (1) are captured time-dependently and are used for calculating the prediction model (VM), and/or **in that** the captured state data is displayed by means of a display device and/or **in that** the at least one piste grooming vehicle (2) is controlled depending on the captured time-dependent snow condition data (SBD).

8. The computer-assisted method according to any of the preceding claims, **characterized in that** information for controlling the driven distance or/and function parameters of a rear-mounted tiller (13) or/and of a clearing blade (14), in particular the insertion depth of the rear-mounted tiller (13) or/and the tilling shaft speed, are output to the driver of the piste grooming vehicle (2) or/and to an autonomous control system for the piste grooming vehicle (2).

9. The computer-assisted system for performing a method according to any of the preceding claims,
with a state sensor system for recording state data of a snow piste, and
with a time-recording unit which is coupled to the state sensor system for capturing the state data time-dependently, wherein
the state sensor system comprises at least one sensor system (15) for recording snow condition data (SBD) of the piste surface of the snow piste (1), and wherein
an electronic data processing system (VM, S, ASS) is provided which is coupled to the state sensor system and to the time-recording unit in order to capture the state data and to calculate from it the prediction model (VM) for the state of the snow piste (1) at at least one point in time in the future, and wherein
an output unit (AD) is connected to the data processing system (VM, S, ASS) and outputs information on the calculated prediction model (VM), **characterized in that** the system comprises at least one piste grooming vehicle (2), wherein at least one of the sensor systems (15) is arranged on the piste grooming vehicle (2) for recording the snow condition data (SBD) in the form of snow hardness and/or snow temperature and/or water proportion of the piste surface.

10. The computer-assisted system according to claim 9, **characterized in that** the state sensor system comprises a sensor system for capturing snow coverage data (BD) of the snow piste (1) and a sensor system for capturing topographical data (TD) of the snow piste (1), wherein the time-recording unit is coupled to the respective sensor system in order to capture the snow coverage data (BD), the topographical data (TD) and the snow condition data (SBD) time-dependently, wherein the electronic data processing system (VM, S, ASS) is coupled to the sensor systems and to the time-recording unit in order to capture the data and to calculate from it the prediction model (VM) for a state of the snow piste (1) at at least one point in time in the future.

11. The computer-assisted system according to claim 9, **characterized in that** at least one sensor system (15) is arranged on the piste grooming vehicle (2), at a penetrating device of the piste grooming vehicle (2) which is configured to penetrate into the piste surface to a substantially consistent depth during movement over the piste surface and to be pulled through the snow cover, and/or **in that** at least one sensor system arranged on the piste grooming vehicle (2) is configured to record structure-borne sound frequencies which are transmitted to the piste grooming vehicle (2) during preparation of the snow piste (1) by the piste grooming vehicle (2) depending on the condition of the piste surface in order to record snow condition data (SBD).

12. The computer-assisted system according to any of claims 9 to 11, **characterized in that** at least one sensor system for recording the snow condition data (SBD) is arranged on the piste surface, in particular embedded in a snow cover of the piste surface.

13. The computer-assisted system according to any of claims 9 to 12, **characterized in that** at least one sensor system is configured for continuous or timed recording of the state data, in particular of the snow condition data (SBD), and/or **in that** the electronic data processing system (VM, S, ASS) has an interface for connection to a unit for obtaining meteorological data (MD) and/or **in that** the electronic data processing system (VM, S, ASS) is coupled wirelessly to an electronic data capture unit which is associated with the at least one piste grooming vehicle (2) and captures position data and/or driving data of the piste grooming vehicle (2) and/or process parameters of the rear-mounted tiller (13) and of the clearing blade (14) of the piste grooming vehicle (2).

14. The computer-assisted system according to any of claims 9 to 13, **characterized in that** the electronic data processing system (VM, S, ASS) is coupled wirelessly or by wire to a stationary counting unit for direct or indirect capture of persons (8) engaged in winter sports and frequenting the snow piste (1), and/or **in that** the system comprises at least one stationary snow-making system (3) which is associated with the snow piste (1), wherein the electronic data processing system (VM, S, ASS) is coupled wirelessly or by wire to a control device (4) of the snow-making system (3) in order to transmit to the control device (4) control commands for snow-making, and/or **in that** the electronic data processing system (VM, S, ASS) is wirelessly connected to a control unit of the piste grooming vehicle (2) in order to transmit to the control unit control commands for actuating a track drive and/or a rear-mounted tiller control and/or a clearing blade control, and/or **in that** a stationary device is provided for controlling frequenting of the snow piste (1), wherein the electronic data processing system (VM, S, ASS) is coupled wirelessly or by wire to the device in order to transmit control commands for altering the frequenting of the snow piste (1).

## Revendications

1. Procédé informatisé d'entretien d'une piste enneigée (1) selon lequel des données d'état de la piste enneigée (1) sont acquises en fonction du temps, sachant
que les données d'état comprennent des données sur les propriétés de la neige (SBD) qui dépendent des propriétés d'une surface de la piste enneigée (1), et sachant
qu'est calculé, à partir des données d'état acquises, un modèle prédictif (VM) pour l'état de la piste enneigée (1) à au moins un moment futur, et sachant
que sont émises des informations (AD) sur le modèle prédictif (VM), caractérisé en ce sont enregistrées, comme données sur les propriétés de la neige (SBD), une dureté de la neige et/ou une température de la neige et/ou une part d'eau au moyen d'au moins un des ensembles de capteurs (15) disposés sur ladite au moins une dameuse (2) dans un mode de conduite de ladite au moins une dameuse, notamment pendant que la piste enneigée (1) est préparée au moyen de la dameuse (2).

2. Procédé informatisé selon la revendication 1, **caractérisé en ce que** des données sur une fréquentation de la piste enneigée (1) par des personnes pratiquant des sports d'hiver (8) sont acquises en fonction du temps et sont utilisées pour calculer le modèle prédictif (VM).

3. Procédé informatisé selon la revendication 1 ou 2, **caractérisé en ce que** les données d'état comprennent des données d'enneigement (BD) de la piste enneigée (1) des données topographiques (TD) de la piste enneigée (1), sachant que les données d'enneigement (BD), les données topographiques (TD) et les données sur les propriétés de la neige (SBD) sont chacune acquises en fonction du temps.

4. Procédé informatisé selon l'une des revendications précédentes, **caractérisé en ce qu'**en partant du modèle prédictif (VM), des instructions de pilotage (S) pour exploiter ladite au moins une dameuse (2) sur la piste enneigée (1) ou/et pour exploiter un canon à neige (3) pour la piste enneigée (1) et/ou pour l'accès à la piste enneigée (1) par des personnes pratiquant des sports d'hiver (8) sont générées, sachant que de préférence, les instructions de pilotage (S) sont émises.

5. Procédé informatisé selon la revendication 4, **caractérisé en ce que** les instructions de pilotage (S) sont transmises à la dameuse (2) et/ou au canon à neige (3) et/ou à des dispositifs stationnaires (6) pour piloter l'accès à la piste enneigée (1) par des personnes pratiquant des sports d'hiver (8) et/ou que les propriétés de la surface de la piste sont adaptées au moins partiellement, notamment en fonction des besoins, au moyen de ladite au moins une dameuse (2) et/ou du canon à neige (3), en fonction des instructions de pilotage (S).

6. Procédé informatisé selon l'une des revendications précédentes, **caractérisé en ce que** lors de l'acquisition des données sur les propriétés de la neige (SBD), des jeux de données sur les propriétés de la neige (SBD) dépendant du temps sont créés, lesquels comprennent, pour chaque acquisition, des données temporelles, des données géographiques et des données de la qualité de la surface de la piste associées entre elles, sachant que des données sur les ordonnées de profondeur sont associées aux données de qualité, de préférence pour chaque acquisition, sachant que de préférence, les données de qualité comprennent une durée de la neige et/ou une température de la neige et/ou une épaisseur de la neige et/ou une part d'eau et/ou que les données d'état comprennent des données de hauteur de neige et des données de volume de neige (HVD) de la piste enneigée (1) et/ou des données topographiques (TD) de la piste enneigée (1).

7. Procédé informatisé selon l'une des revendications précédentes, **caractérisé en ce qu'**en fonction du temps, des données météorologiques (MD) actuelles et/ou futures pour un environnement de la piste enneigée (1) sont acquises et utilisées pour le calcul du modèle prédictif (VM) et/ou qu'en fonction du temps, des paramètres de conduite et/ou des paramètres de processus d'au moins une dameuse (2) préparant la piste enneigée (1) sont acquis et utilisés pour calculer le modèle prédictif (VM) et/ou que les données d'état acquises sont affichées au moyen d'un dispositif d'affichage et/ou que ladite au moins une dameuse (2) est pilotée en fonction des données sur les propriétés de la neige (SBD) acquises, dépendant du temps.

8. Procédé informatisé selon l'une des revendications précédentes, **caractérisé en ce que** des informations sur le pilotage du trajet et/ou des paramètres de fonctionnement d'une fraiseuse arrière (13) et/ou d'une lame de déblaiement (14), notamment la profondeur d'enfoncement de la fraiseuse arrière (13) et/ou la vitesse de l'arbre de fraisage sont émis au conducteur de la dameuse (2) et/ou à un système de pilotage autonome pour la dameuse (2).

9. Système informatisé servant à exécuter un procédé selon l'une des revendications précédentes,
avec un ensemble de capteurs d'état pour enregistrer des données d'état d'une piste enneigée, et
avec une unité de saisie du temps à laquelle est couplé l'ensemble de capteurs d'état pour acquérir les données d'état en fonction du temps, sachant
que l'ensemble de capteurs d'état comprend au moins un ensemble de capteurs (15) pour enregistrer des données sur les propriétés de la neige (SBD) de la surface de la piste enneigée (1), et sachant
qu'est prévu un système électronique de traitement des données (VM, S, ASS) qui est couplé à l'ensemble de capteurs d'état et à l'unité de saisie du temps pour acquérir les données d'état et calculer à partir de cela le modèle prédictif (VM) pour l'état de la piste enneigée (1) à au moins un moment futur, et sachant
qu'est raccordée au système de traitement des données (VM, S, ASS) une unité de sortie (AD) qui émet des informations sur le modèle prédictif calculé (VM), **caractérisé en ce que** le système comprend au moins une dameuse (2), sachant qu'au moins un des ensembles de capteurs (15) pour enregistrer les données sur les propriétés de la neige (SBD) sous la forme de dureté de la neige et/ou température de la neige et/ou part d'eau de la surface de la piste est disposé sur la dameuse (2).

10. Système informatisé selon la revendication 9, **caractérisé en ce que** l'ensemble de capteurs d'état comprend un ensemble de capteurs pour acquérir des données d'enneigement (BD) de la piste enneigée (1) et un ensemble de capteurs pour acquérir des données topographiques (TD) de la piste enneigée (1), sachant que l'unité de saisie du temps est couplée à l'ensemble de capteurs respectif pour acquérir en fonction du temps les données d'enneigement (BD), les données topographiques (TD) et les données sur les propriétés de la neige (SBD), sachant que le système électronique de traitement des données (VM, S, ASS) est couplé aux ensembles de capteurs et à l'unité de saisie du temps afin d'acquérir les données et de calculer à partir d'elles le modèle prédictif (VM) pour un état de la piste enneigée (1) à au moins un moment futur.

11. Système informatisé selon la revendication 9, **caractérisé en ce qu'**au moins un ensemble de capteurs (15) disposé sur la dameuse (2) est disposé sur un dispositif d'enfoncement de la dameuse (2), qui est configuré pour s'enfoncer dans la surface de la piste, à une profondeur essentiellement constante, lors du passage sur la surface de la piste et à être tirée à travers la couverture neigeuse et/ou qu'au moins un ensemble de capteurs disposé sur la dameuse (2) est configuré pour enregistrer des fréquences de bruit structurel qui sont transmises à la dameuse (2) lors de la préparation de la piste enneigée (1) au moyen de la dameuse (2) en fonction des propriétés de la surface de la piste, pour enregistrer des données sur les propriétés de la neige (SBD).

12. Système informatisé selon l'une des revendications 9 à 11, **caractérisé en ce qu'**au moins un ensemble de capteurs pour enregistrer des données sur les propriétés de la neige (SBD) est disposé au niveau de la surface de la piste, notamment enfoui dans une couverture neigeuse de la surface de la piste.

13. Système informatisé selon l'une des revendications 9 à 12, **caractérisé en ce qu'**au moins un ensemble de capteurs est configuré pour l'enregistrement continu ou cadencé dans le temps des données d'état, notamment des données sur les propriétés de la neige (SBD) et/ou que le système électronique de traitement des données (VM, S, ASS) est une interface pour un raccordement à une unité d'acquisition des données météorologiques (MD) et/ou que le système électronique de traitement des données (VM, S, ASS) est couplé sans fil à une unité électronique d'acquisition des données, qui est associée à ladite au moins une dameuse (2) et acquiert des données de position et/ou des données de conduite de la dameuse (2) et/ou des paramètres de processus de la fraiseuse arrière (13) et de la lame de déblaiement (14) de la dameuse (2).

14. Système informatisé selon l'une des revendications 9 à 13, **caractérisé en ce que** le système électronique de traitement des données (VM, S, ASS) est couplé sans fil ou par fil à un dispositif stationnaire de comptage pour l'acquisition directe ou indirecte des personnes pratiquant des sports d'hiver (8) qui fréquentent la piste enneigée (1) et/ou que le système comprend au moins un canon à neige stationnaire (3) qui est associé à la piste enneigée (1), sachant que le système électronique de traitement des données (VM, S, ASS) est couplé sans fil ou par fil à un dispositif de pilotage (4) du canon à neige (3) pour transmettre au dispositif de pilotage (4) des instructions de pilotage pour un enneigement et/ou que le système électronique de traitement des données (VM, S, ASS) est relié sans fil à une unité de pilotage de la dameuse (2) pour transmettre à l'unité de pilotage des instructions de pilotage pour piloter un entraînement de train de roulement et/ou une commande de fraiseuse arrière et/ou une commande de lame de déblaiement et/ou qu'un dispositif stationnaire est prévu pour le pilotage d'une fréquentation de la piste enneigée (1), sachant que le système électronique de traitement des données (VM, S, ASS) est couplé sans fil ou par fil au dispositif pour transmettre des instructions de pilotage destinées à modifier la fréquentation de la piste enneigée (1).
